(19) Europäisches Patentamt
European Patent Office
Office européen des brevets

(11) **EP 4 685 529 A1**

(12) **EUROPEAN PATENT APPLICATION**

(43) Date of publication:
**28.01.2026 Bulletin 2026/05**

(21) Application number: **24190917.5**

(22) Date of filing: **25.07.2024**

(51) International Patent Classification (IPC):
**G02B 6/00** (2006.01)      **G02B 27/09** (2006.01)

(52) Cooperative Patent Classification (CPC):
**G02B 27/0927; G02B 27/0994;** G02B 6/14;
G02B 6/268

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ASML Netherlands B.V.
5500 AH Veldhoven (NL)**

(72) Inventor: **VAN VOORST, Peter, Danny
5500 AH Veldhoven (NL)**

(74) Representative: **ASML Netherlands B.V.
Corporate Intellectual Property
P.O. Box 324
5500 AH Veldhoven (NL)**

(54)    **METHOD AND APPARATUS FOR HOMOGENIZING A BEAM OF RADIATION**

(57)    Disclosed is an optical arrangement for homogenizing a beam of radiation, comprising: a first fiber for receiving the beam of radiation; a second fiber for outputting a homogenized beam of radiation; wherein both the first fiber and the second fiber are configured to homogenize the beam of radiation; and a transforming element located between the first fiber and the second fiber; wherein the second fiber comprises a length configured such that the beam of radiation exiting the second fiber comprises a substantially homogenized spatial intensity distribution and a substantially homogenized angular intensity distribution, both having a homogeneity of at least 0.60.

Fig. 8

## Description

### FIELD

The present invention relates to a method and apparatus for homogenizing a beam of radiation, in particular a fiber-based solution for homogenizing a beam of broadband radiation.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications.

In metrology, and particularly metrology using scatterometers, the homogeneity of the beam of radiation used for the measurement is important. Therefore, it is desirable to improve homogeneity of such a beam and/or control thereof.

### SUMMARY

According to a first aspect of the invention, there is provided an optical arrangement for homogenizing a beam of radiation, comprising: a first fiber for receiving the beam of radiation; a second fiber for outputting a homogenized beam of radiation; wherein both the first fiber and the second fiber are configured to homogenize the beam of radiation; and a transforming element located between the first fiber and the second fiber; wherein the second fiber comprises a length configured such that the beam of radiation exiting the second fiber comprises a substantially homogenized spatial intensity distribution and a substantially homogenized angular intensity distribution, both having a homogeneity of at least 0.60.

According to a second aspect of the invention, there is provided a method of homogenizing a beam of radiation, comprising: propagating the beam of radiation through a first fiber to at least partially homogenize the radiation; transforming a spatial intensity distribution of the radiation exiting the first fiber at least partially into an angular intensity distribution of the radiation entering a second fiber; transforming an angular intensity distribution of the radiation exiting the first fiber at least partially into a spatial intensity distribution of the radiation entering the second fiber; propagating the beam of radiation through the second fiber to further homogenize the radiation; and outputting the homogenized beam of radiation from the second fiber; wherein the second fiber comprises a length configured such that the beam of radiation exiting the second fiber comprises a substantially homogenized spatial intensity distribution and a substantially homogenized angular intensity distribution, both having a homogeneity of at least 0.60.

Other aspects of the invention comprise metrology device configured to illuminate a sample with the homogenized beam of radiation output from an optical arrangement according to the first aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7A depicts schematically a prior art optical arrangement configured to homogenize a beam of radiation;

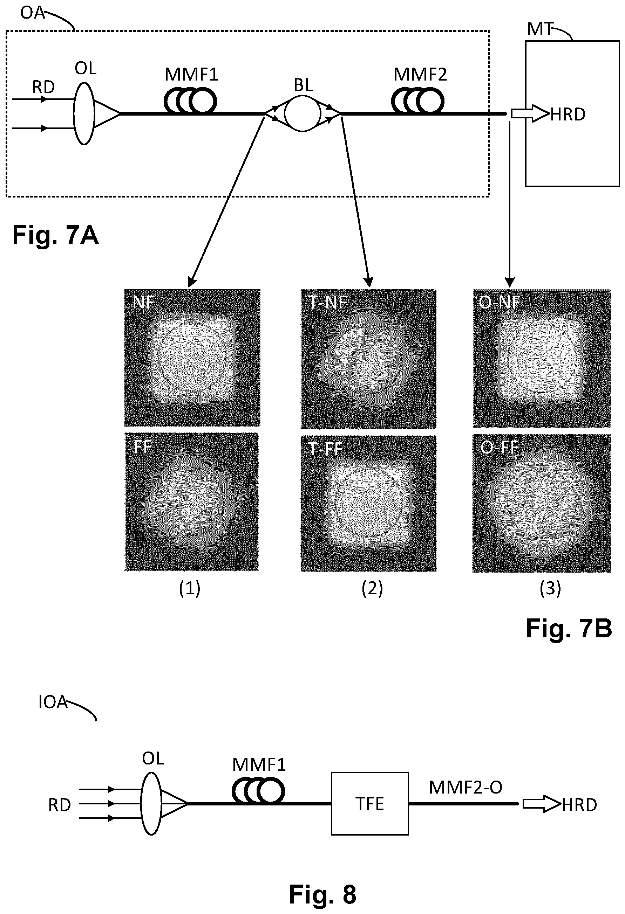

- Figure 7B comprises a first set of near-field and far-field images illustrating respectively a spatial intensity distribution and an angular intensity distribution of the radiation at the exit face of the first multimode fiber; a second set of near-field and far-field images illustrating respectively a spatial intensity distribution and an angular intensity distribution of the radiation at the entry face of the second multimode fiber; and a third set of near-field and far-field images illustrating respectively a spatial intensity distribution and an angular intensity distribution of the radiation at the exit face of the second multimode fiber;
- Figure 8 depicts schematically a proposed optical arrangement for homogenizing a beam of radiation in accordance with an embodiment;
- Figure 9 depicts schematically a proposed optical arrangement for homogenizing a beam of radiation in accordance with a different embodiment;
- Figure 10 depicts schematically a proposed optical arrangement for homogenizing a beam of radiation in accordance with another different embodiment;
- Figure 11 depicts schematically a proposed optical arrangement for homogenizing a beam of radiation in accordance with another different embodiment;
- Figure 12 depicts schematically a proposed optical arrangement for homogenizing a beam of radiation in accordance with another different embodiment; and
- Figure 13 depicts a block diagram of a computer system for controlling a broadband radiation source.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultraviolet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

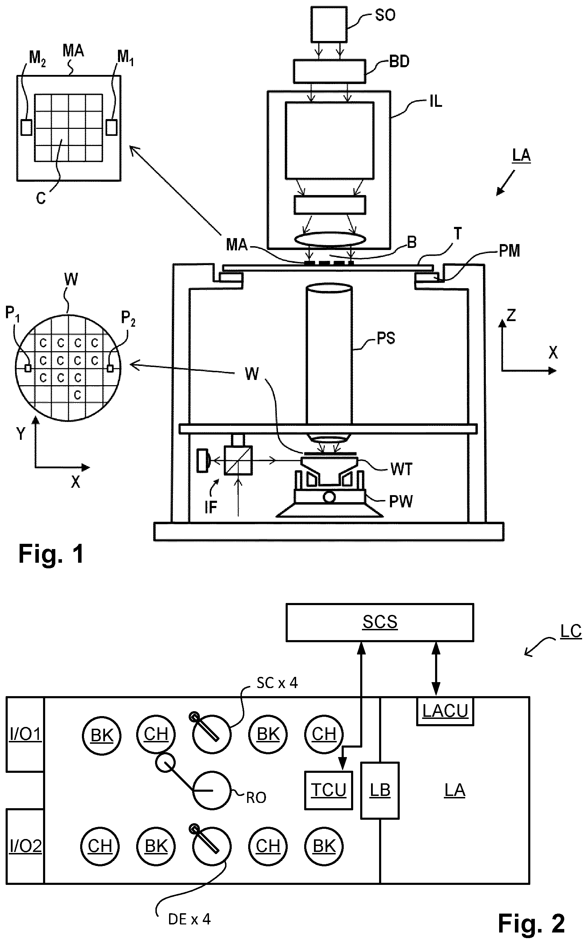

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253B2, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

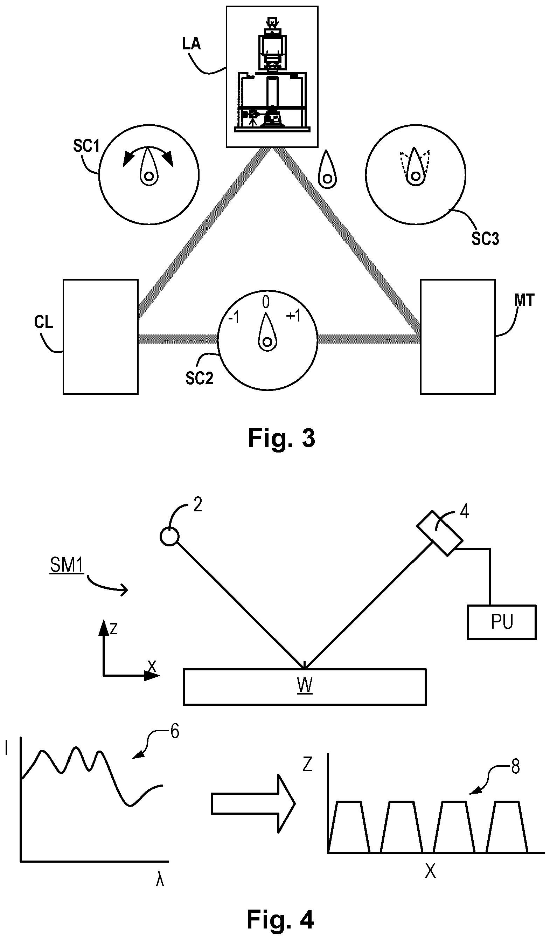

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US2010/0328655A1, US2011/102753A1, US2012/0044470A1, US2011/0249244A1, US2011/0026032A1 or EP1628164A2, which are incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patents US7791724B2, US7701577B2, US8115926B2, US8553227B2, US8681312B2, US8792096B2, US8823922B2, US8692994B2, US13/533110 and US8797554B2, which are incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1628164A2, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication WO2011/012624A1 or US patent application US2016/0161863A1, which are incorporated herein by reference in its entirety.

Other parameters of interest may be focus and dose. Focus and dose may be determined simultaneously by scatterometry (or alternatively by scanning electron microscopy) as described in US patent application US2011/0249244A1, which is incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863A1 and published US patent application US2016/0370717A1, which are incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863A1 and published US patent application US2016/0370717A1 which are incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

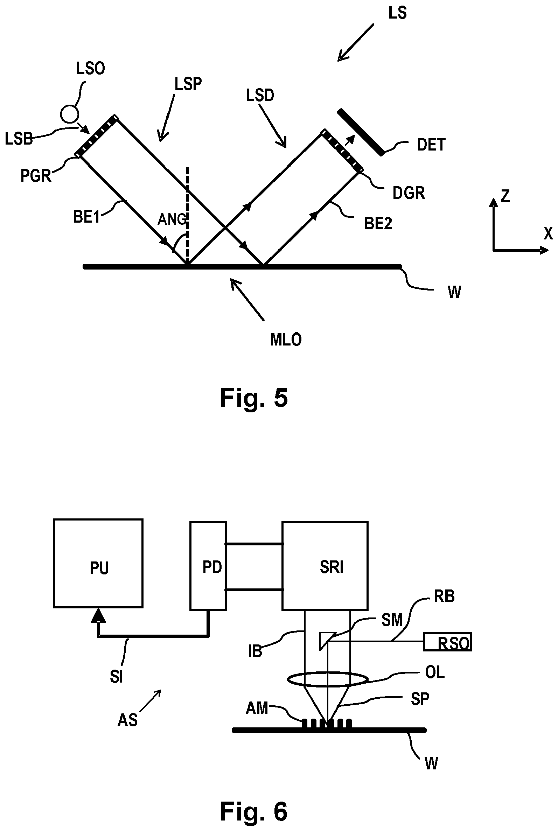

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364B2 and US7646471B2, both incorporated by reference. A height sensor using UV radiation instead of visible or infrared radiation is disclosed in US2010/233600A1, incorporated by reference. In WO2016/102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116B2. Various enhancements and modifications of the position sensor have been developed, for example as disclosed in US2015/261097A1. The contents of all of these publications are incorporated herein by reference.

Figure 6 is a schematic block diagram of an embodiment of a known alignment sensor AS, such as is described, for example, in US6961116B2, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116B2 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

For metrology and other demanding applications, the characteristics of the radiation used to illuminate a target structure is generally carefully controlled. Therefore, in addition to an appropriate radiation source, an optical arrangement or system is generally required for conditioning (e.g., homogenizing) the radiation. In metrology, it is often desired that the beam of radiation should be as homogenous as possible. This is true for both field imaging and pupil imaging, in the scatterometers described above. For asymmetry measurements, it may be sufficient if the illumination is symmetrical. For angle-resolved scatterometry in the pupil plane, complete homogeneity is normally desirable. It is therefore desirable to provide a beam homogenizer that is capable of homogenizing a beam of radiation such that the spatial intensity distribution (i.e. the near-field intensity distribution) and the angular intensity distribution (i.e. the far-field intensity distribution) of the radiation are both homogenized (e.g., in a manner sufficient for a given metrology application).

At present, various techniques have been developed for light homogenization. Among these existing techniques, the fiber-based approach, such as the optical arrangement shown in Figure 7A, has attracted a lot of interests because it not only enables a good homogenization performance but also provides an additional flexibility in transporting light either directly to a target structure or to a metrology apparatus (as the fiber from which a homogenized beam of radiation is outputted acts as both a beam homogenizer and a light transporter).

Figure 7A schematically depicts a prior art optical arrangement configured to homogenize a beam of radiation. As shown in Figure 7A, the optical arrangement OA comprises an optical lens OL, a first multimode fiber MMF1, a ball lens BL and a second multimode fiber MMF2. The optical lens OL is configured to couple a beam of radiation RD into the core of the first multimode fiber MMF1. The radiation RD exiting the first multimode fiber MMF1 then passes through the ball lens BL before being coupled into the second multimode fiber MMF2. In this specific example, the first multimode fiber MMF1 and the second multimode fiber MMF2 each comprise a square-shaped fiber core (see square-shaped near-field intensity distribution in the near-field image NF or O-NF of Figure 7B).

Each of the first multimode fiber MMF1 and the second multimode fiber MMF2 homogenizes the radiation RD through chaotic mixing of the radiation RD as the radiation RF internally reflects multiple times within the fiber. The ball lens BL functions as a transforming element configured to transform a spatial distribution of the radiation RD exiting the first multimode fiber MMF1 at least partially into an angular distribution of the radiation RD entering the second multimode fiber MMF2 and to transform an angular distribution of the radiation RD exiting the first multimode fiber MMF 1 at least partially into a spatial distribution of the radiation RD entering the second multimode fiber MMF2. This is effectively a Fourier transform. As such, the radiation HRD exiting the second multimode fiber MMF2 has both a homogenized spatial intensity distribution (i.e. a homogenized near-field intensity distribution) and a homogenized angular intensity distribution (i.e. a homogenized far-field intensity distribution). The homogenized beam of radiation HRD may be provided to a metrology apparatus MT for illuminating a target structure (e.g., a wafer). Further information about fiber-based beam homogenizer (e.g., as shown in Figure 7) can be found in US patent US10303064B2, and the scientific publication Samuel Halverson, Arpita Roy, Suvrath Mahadevan, Lawrence Ramsey, Eric Levi, Christian Schwab, Fred Hearty, and Nick MacDonald, "An efficient, compact, and versatile fiber double scrambler for high precision radial velocity instruments," The Astrophysical Journal, 806:61 (9pp), 2015, which are both incorporated herein by reference.

With reference to Figure 7B, after propagating through the first multimode fiber MMF1, the spatial intensity distribution (as shown in the near-field image NF) of the radiation RD exiting the first multimode fiber MMF1 is substantially homogenized but the angular intensity distribution (as shown in the far-field image FF) of the radiation RD is not homogenized. Note that the solid circle in each near-field or far-field image indicates the region of interest. As a result of the transformation by the ball lens BL, the spatial intensity distribution (as shown in the near-field image NF) of the radiation RD exiting the first multimode fiber MMF1 is at least partially transformed into the angular intensity distribution (as shown in the transformed far-field image T-FF) of the radiation RD entering the second multimode fiber MMF2 and the angular intensity distribution (as shown in the far-field image FF) of the radiation RD exiting the first multimode fiber MMF1 is at least partially transformed into the spatial intensity distribution (as shown in the transformed near-field image T-NF) of the radiation RD entering the second multimode fiber MMF2. After propagating through the second multimode fiber MMF2, the spatial intensity distribution (as shown in the output near-field image O-NF) and the angular intensity distribution (as shown in the output far-field image O-FF) of the radiation HRD exiting the second multimode fiber MMF2 are both substantially homogenized.

For a beam of radiation having a flat-top far-field and near-field intensity profiles (e.g., as shown in the output far-field image O-FF and the output near-field image O-NF), the homogeneity of the beam may be defined by the residual pattern in the far-field intensity profile or the near-field intensity profile. The homogeneity *HOM* may be expressed as:

$$HOM = 1 - \frac{I_{max} - I_{min}}{I_{average}}; \qquad\qquad [1]$$

where $I_{max}$ denotes the maximum intensity of the far-field or near-field intensity profile, $I_{min}$ denotes the minimum intensity of the far-field or near-field intensity profile, $I_{average}$ denotes the average intensity of the far-field or near-field intensity profile. Different applications may require different degrees of homogeneity. For example, for scatterometry-based metrology applications, the homogeneity of the illumination beam may be desirable to be at least 0.60, at least 0.65, at least 0.70, at least 0.75, at least 0.80, at least 0.85, or at least 0.90.

In many applications such as scatterometry-based metrology applications, a relatively long (e.g., on the order of one to several meters) second multimode fiber MMF2 is required to transport a homogenized beam of radiation to a location either immediately adjacent to or within a metrology apparatus. However, it is difficult if not impossible to propagate the radiation RD over several meters of the second multimode fiber MMF2 while substantially maintaining the homogeneity of the angular intensity distribution (or far-field distribution) of the radiation RD that has been substantially homogenized by the first multimode fiber MMF 1. When propagating through a long multimode fiber, the degradation of the homogeneity of the radiation mainly results from bending-induced coupling of the radiation into higher order modes of the fiber. It is known that higher order modes correlate with larger internal reflection angles with respect to the optical axis of the fiber. These higher order modes are more susceptible to loss because the larger internal reflection angles are closer to the critical angle of the fiber. As such, when the fiber is subjected to bending, it is more likely for the radiation propagating within the fiber to interact with the core-cladding interface at an angle larger than the critical angle. This results in the radiation being at least partially coupled out from the core to the cladding and thus causes transmission loss. Furthermore, local imperfections in the core-cladding interface also increase the likelihood of the radiation being interacting with the core-cladding interface at an angle larger than the critical angle, therefore resulting in the radiation being coupled out from the core to the cladding and causing transmission loss.

This problem appears to be caused by a gap in knowledge about how long a beam of radiation can propagate through an optical fiber (e.g., a multimode fiber) without the homogeneity of the beam of radiation exiting the fiber being significantly degraded. Here, "significant degradation" of homogeneity means the homogeneity of the radiation drops by at least 0.1. It is therefore proposed to provide an improved optical arrangement that is capable of addressing the above-mentioned problem and thus providing an improved homogenization performance. The optical arrangement in one example may be referred to as a beam homogenizer, and may for example be suitable for use in an illumination system of a metrology apparatus.

In accordance with the principles of the present disclosure, the proposed optical arrangement may comprise a first fiber for receiving a beam of radiation, a second fiber for outputting a homogenized beam of radiation, and a transforming element located between the first fiber and the second fiber. Both the first fiber and the second fiber may be configured to homogenize the beam of radiation via chaotic mixing. The first fiber and/or second fiber may be a multimode fiber. The transforming element may be configured to transform a spatial distribution of the radiation exiting the first fiber at least partially into an angular distribution of the radiation entering the second fiber and to transform an angular distribution of the radiation exiting the first fiber at least partially into a spatial distribution of the radiation entering the second fiber. The second fiber may comprise a length configured such that the beam of radiation exiting the second fiber comprises a substantially homogenized spatial intensity distribution and a substantially homogenized angular intensity distribution, both having a homogeneity of at least 0.60.

In an embodiment, the homogeneity of the spatial intensity distribution and the angular intensity distribution of the beam of radiation exiting the second fiber may be at least 0.80.

In an embodiment, at least a peripheral portion of the beam of radiation may undergo at least a certain number (e.g., 3, 5, 7, or 10) of internal reflections within the second fiber, said peripheral portion of the beam of radiation forming a maximum internal angle with respect to an optical axis of the second fiber.

In an embodiment, the length of the second fiber may be configured to maximize the homogeneity of the spatial intensity distribution and/or the angular intensity distribution of the beam of radiation. The length of the second fiber may be determined by performing a fiber cutback method. In the fiber cutback method, a test fiber identical to the second fiber may be incrementally shortened from a certain starting length by cutting off a short portion of the fiber at each time. After each cut, the homogeneity of the spatial intensity distribution and the angular intensity distribution of the beam of radiation exiting the second fiber may be measured. The cutting and measuring steps may be repeated until the maximal homogeneity value is obtained. The fiber length with which the maximal homogeneity value is obtained may be determined to be the target length for the second fiber. Alternatively or in addition, the length of the second fiber may be determined by performing a simulation on the homogenized beam of radiation exiting the second fiber.

Different implementations of such an optical arrangement will be described and illustrated in the following.

With reference to Figure 8, in an embodiment, the improved optical arrangement IOA may comprise an optical lens OL, a first multimode fiber MMF1, a transforming element TFE, a second multimode fiber MMF-O. The working principle of the improved optical arrangement IOA is similar to the optical arrangement OA shown in Figure 7A but the improved optical arrangement IOA is capable of providing an improved homogenization performance.

The optical lens OL may be configured to couple a beam of radiation RD into the first multimode fiber MMF1. The input radiation RD may be a broadband radiation spanning a wavelength range from 300 nm to 2000 nm and may be provided by a broadband radiation source such as for example a photonic crystal fiber (PCF) based supercontinuum source. The radiation RD exiting the first multimode fiber MMF1 may then pass through the transforming element TFE before entering the second multimode fiber MMF2-O. Upon exiting the second multimode fiber MMF2-O, the homogenized beam of radiation HRD may be provided to a metrology apparatus (not shown in Figure 8) for illuminating a target structure (e.g., a semiconductor wafer).

Each of the first multimode fiber MMF1 and the second multimode fiber MMF2-O may be configured to homogenize the radiation RD through chaotic mixing of the radiation RD as it internally reflects multiple times within the fiber. The length of the first multimode fiber MMF1 may be at least 300 mm, at least 500 mm, at least 700 mm, or at least 900 mm. The length of the second multimode fiber MMF2-O may be optimized to prevent the homogeneity of the radiation RD from undergoing a significant degradation while propagating through the fiber. The optimal length of the second multimode fiber MMF2-O may be determined as the length along which the homogeneity of the angular intensity distribution and/or the spatial intensity distribution of the radiation RD reaches a maximum homogeneity value. The maximum homogeneity value may be for example at least 0.80, at least 0.85, at least 0.90, at least 0.95, or 1.00. The maximum homogeneity value may be achieved after at least a peripheral portion (e.g., the portion at the edge of the angular region of interest) of the radiation RD undergoes at least 3, 5, 7, or 9 internal reflections within the second multimode fiber MMF-O. Depending on the fiber parameters (e.g., fiber core size, fiber NA, and/or fiber length), the optimal length of the second multimode fiber MMF-O may be at least 5 mm, at least 10 mm, at least 20 mm, at least 30 mm, or between 9 mm and 35 mm. Any length longer than such an optimal length may result in the homogeneity of the angular intensity distribution of the radiation RD reducing from the maximum homogeneity value to a lower value. The difference between a reduced homogeneity value and the maximum homogeneity value may be defined as the degradation of the homogeneity. A significant degradation of the homogeneity may be for example at least 0.10, at least 0.15, at least 0.20, or at least 0.25. In an alternative embodiment, the length of the second multimode fiber MMF2-O may be sub-optimal as long as the homogeneity of the beam of radiation exiting the second multimode fiber MMF2-O still meets application needs.

In an embodiment, one or both of the first multimode fiber MMF1 and the second multimode fiber MMF2-O may comprise a non-circular-shaped fiber core. In an embodiment, one or both of the first multimode fiber MMF1 and the second multimode fiber MMF2-O may comprise a regular polygon-shaped fiber core, such as for example a square shaped core or a rectangle-shaped fiber core. In an embodiment, one or both of the first multimode fiber MMF1 and the second multimode fiber MMF2-O may comprise an irregular polygon shaped fiber core.

The transforming element TFE may be configured to transform a spatial distribution of the radiation RD exiting the first multimode fiber MMF1 at least partially into an angular distribution of the radiation RD entering the second multimode fiber MMF2-O and to transform an angular distribution of the radiation RD exiting the first multimode fiber MMF1 at least partially into a spatial distribution of the radiation RD entering the second multimode fiber MMF2-O. This is effectively a Fourier transform. As such, the radiation RD exiting the second multimode fiber MMF2 may have both a homogenized spatial intensity distribution (i.e. a homogenized near-field intensity distribution) and a homogenized angular intensity distribution (i.e. a homogenized far-field intensity distribution).

In an embodiment, the transforming element TFE may comprise a free-space optical lens which may be configured to couple the radiation RD exiting the first multimode fiber MMF 1 into the second multimode fiber MMF2-O. In an embodiment, the free-space optical lens may be in direct contact with an output end face of the first multimode fiber MMF1 and an input end face of the second multimode fiber MMF2-O. In a different embodiment, there may be an air gap between the output end face of the first multimode fiber MMF1 and the free-space optical lens, and between the input end face of the second multimode fiber MMF2-O and the free-space optical lens. In an embodiment, the free-space optical lens may be a ball lens (e.g., the ball lens BL shown in Figure 7A) which may or may not be in direct contact with the output end face of the first multimode fiber MMF1 and the input end face of the second multimode fiber MMF2-O. In a different embodiment, the free-space optical lens may be a gradian-index (GRIN) lens (e.g., GRIN lenses marketed by Thorlabs Inc.) which may or may not be in direct contact with the output end face of the first multimode fiber MMF1 and the input end face of the second multimode fiber MMF2-O.

In an embodiment, the transforming element TFE may comprise a GRIN fiber (e.g., GRIN multimode fibers marketed by Thorlabs Inc.). The GRIN fiber may have a length of for example between 100 $\mu$m and 1000 $\mu$m, between 100 $\mu$m and 800 $\mu$m, between 100 $\mu$m and 600 $\mu$m, or between 100 $\mu$m and 400 $\mu$m. The GRIN fiber may be spliced to both of the first multimode fiber MMF1 and the second multimode fiber MMF2-O, i.e. an input end face of the GRIN fiber may be spliced to the output end face of the first multimode fiber MMF 1 and an output end face of the GRIN fiber may be spliced to the input end face of the second multimode fiber MMF2-O. As such, the first multimode fiber MMF1, the GRIN fiber TFE and the second multimode fiber MMF2 may form a single fiber providing a continuous optical path from an input end face of the first multimode fiber MMF1 to an output end face of the second multimode fiber MMF2-O.

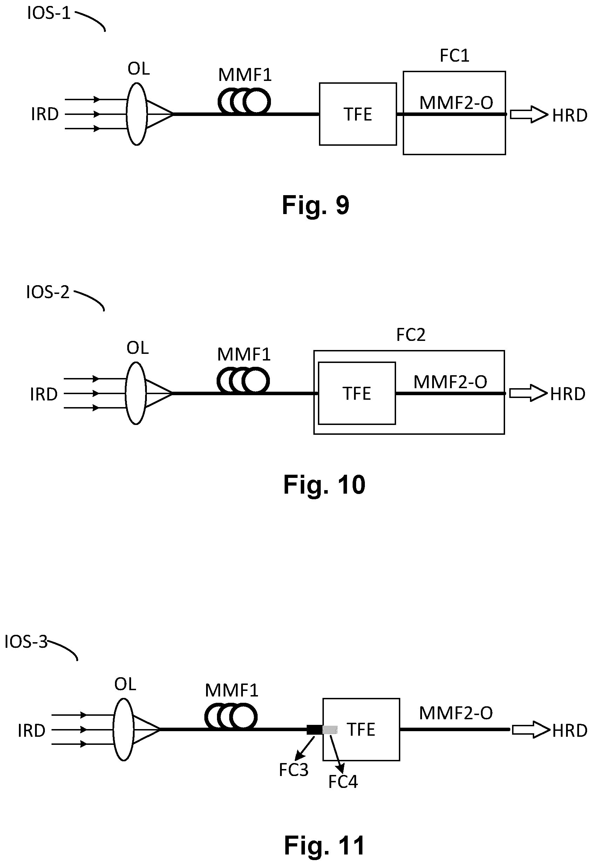

It is possible that the optimal length of the second multimode fiber MMF-O may be too short (e.g., a few tens of millimeters) to provide a desired flexibility in transporting the homogenized radiation to a target place (e.g., a sample or a metrology apparatus). Since the first multimode fiber MMF1 has a much longer length (e.g., the first multimode fiber MMF1 may be at least one order of magnitude longer than the second multimode fiber MMF2-O), it may be desirable to make use of the flexibility provided by the first multimode fiber MMF1. This may require at least part of the first multimode fiber MMF1, and/or at least part of the transforming element TFE, and/or at least part of the second multimode fiber MMF2 be assembled or packaged into a single assembly (e.g., a fiber connector). Figures 9 to 12 schematically depict four different implementations of the improved optical arrangement IOS-1, IOS-2, IOS-3, and IOS-4, respectively. These implementations may simultaneously provide an improved homogenization performance and a desired flexibility in transporting the homogenized radiation.

With reference to Figure 9, in this implementation IOS-1, at least an output end portion of the second multimode fiber MMF-O may be comprised within a fiber connector FC1. Such a fiber connector may be connectable to a mated connector e.g., located in a metrology apparatus (not shown). This configuration may be particularly suitable for cases where the transforming element TFE is a fiber element (e.g., a GRIN multimode fiber) that is spliced to both the first multimode fiber MMF1 and the second multimode fiber MMF2-O. However, it will be appreciated that such a configuration may still be applicable in the case where the transforming element TFE is a free-space optical lens (e.g., a ball lens or a GRIN lens) because it may be possible to fixedly connect (e.g., by optical adhesives) the free-space optical lens to an output end portion of the first multimode fiber MMF1 and an input end portion of the second multimode fiber MMF2-O so as to form an integral part.

With reference to Figure 10, in this implementation IOS-2, the transforming element TFE and the second multimode fiber MMF2-O may be both comprised within a fiber connector FC2. An output end portion of the first multimode fiber MMF1 may be outside the fiber connector FC2 and may be fixedly connected to (e.g., by means of optical adhesives or fiber splicing) an input end portion of the transforming element TFE which may be either a free-space optical lens (e.g., a ball lens or a GRIN lens) or a fiber element (e.g., a GRIN multimode fiber). In an implementation, an output end portion of the first multimode fiber MMF 1 together with the transforming element TFE and the second multimode fiber MMF2-O may be comprised within the fiber connector FC2.

With reference to Figure 11, in this implementation IOS-3, an output end portion of the first multimode fiber MMF1 may be comprised within a first fiber connector FC3 and at least an input end portion of the transforming element TFE may be comprised within a second fiber connector FC4 mated to the first fiber connector FC3. In an embodiment, the transforming element TFE and the second multimode fiber MMF2-O may be both comprised within the second fiber connector FC4. This configuration may be particularly suitable for the case where the transforming element TFE is a fiber element (e.g., a GRIN multimode fiber) that is spliced to both the first multimode fiber MMF1 and the second multimode fiber MMF2-O.

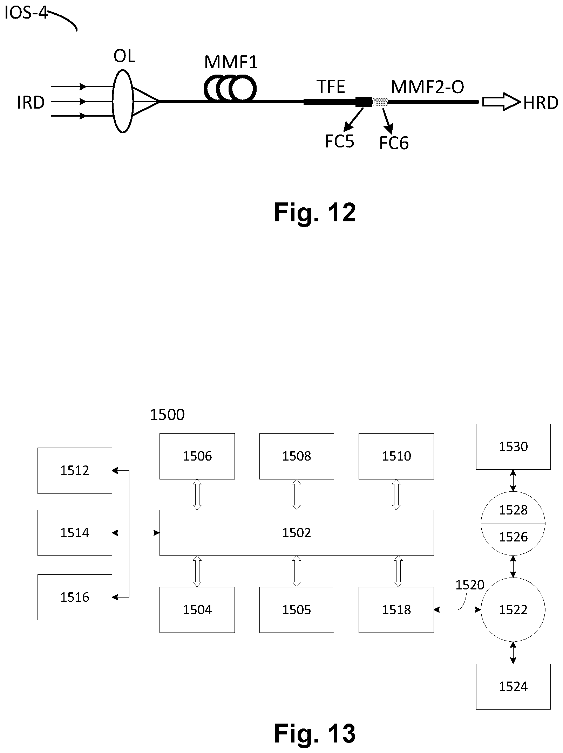

With reference to Figure 12, in this implementation IOS-4, at least an output end portion of the transforming element TFE may be comprised within a first fiber connector FC5 and at least an input end portion of the second multimode fiber may be comprised within a second fiber connector FC6 mated to the first fiber connector FC5. In an embodiment, the entire second multimode fiber MMF2-O may be comprised within the second fiber connector FC6. This configuration may be particularly suitable for the case where the transforming element TFE is a fiber element (e.g., a GRIN multimode fiber) that is spliced to the first multimode fiber MMF 1.

A different aspect of the present disclosure provides a method of homogenizing a beam of radiation. The method may comprise: propagating the beam of radiation through a first fiber to at least partially homogenize the radiation; transforming a spatial intensity distribution of the radiation exiting the first fiber at least partially into an angular intensity distribution of the radiation entering a second fiber; transforming an angular intensity distribution of the radiation exiting the first fiber at least partially into a spatial intensity distribution of the radiation entering the second fiber; propagating the beam of radiation through the second fiber to further homogenize the radiation; and outputting the homogenized beam of radiation from the second fiber. The second fiber may comprise a length configured such that the beam of radiation exiting the second fiber comprises a substantially homogenized spatial intensity distribution and a substantially homogenized angular intensity distribution, both having a homogeneity of at least 0.60. Both the first fiber and the second fiber may be configured to homogenize the beam of radiation via chaotic mixing. The first fiber and/or second fiber may be a multimode fiber.

In an embodiment, the length of the second fiber may be configured to maximize the homogeneity of the spatial intensity distribution and/or the angular intensity distribution of the beam of radiation. The length of the second fiber may be determined by performing a fiber cutback method (as described above). Alternatively or in addition, the length of the second fiber may be determined by performing a simulation on the homogenized beam of radiation exiting the second fiber.

Note that although the foregoing embodiments (e.g., as shown in Figures 8-12) all use multimode fibers (i.e. MMF1 and MMF2-O) for light homogenization, other types of optical fibers may be equally applicable as long as they homogenize a beam of radiation.

Figure 13 is a block diagram that illustrates a computer system 1500 that may assist in implementing the methods and flows disclosed herein. Computer system 1500 includes a bus 1502 or other communication mechanism for communicating information, and a processor 1504 (or multiple processors 1504 and 1505) coupled with bus 1502 for processing information. Computer system 1500 also includes a main memory 1506, such as a random access memory (RAM) or other dynamic storage device, coupled to bus 1502 for storing information and instructions to be executed by processor 1504. Main memory 1506 also may be used for storing temporary variables or other intermediate information during execution of instructions to be executed by processor 1504. Computer system 1500 further includes a read only memory (ROM) 1508 or other static storage device coupled to bus 1502 for storing static information and instructions for processor 1504. A storage device 1510, such as a magnetic disk or optical disk, is provided and coupled to bus 1502 for storing information and instructions.

Computer system 1500 may be coupled via bus 1502 to a display 1512, such as a cathode ray tube (CRT) or flat panel or touch panel display for displaying information to a computer user. An input device 1514, including alphanumeric and other keys, is coupled to bus 1502 for communicating information and command selections to processor 1504. Another type of user input device is cursor control 1516, such as a mouse, a trackball, or cursor direction keys for communicating direction information and command selections to processor 1504 and for controlling cursor movement on display 1512. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1500 in response to processor 1504 executing one or more sequences of one or more instructions contained in main memory 1506. Such instructions may be read into main memory 1506 from another computer-readable medium, such as storage device 1510. Execution of the sequences of instructions contained in main memory 1506 causes processor 1504 to perform the process steps described herein. One or more processors in a multi-processing arrangement may also be employed to execute the sequences of instructions contained in main memory 1506. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1504 for execution. Such a medium may take many forms, including but not limited to, non-volatile media, volatile media, and transmission media. Non-volatile media include, for example, optical or magnetic disks, such as storage device 1510. Volatile media include dynamic memory, such as main memory 1506. Transmission media include coaxial cables, copper wire and fiber optics, including the wires that comprise bus 1502. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1504 for execution. For example, the instructions may initially be borne on a magnetic disk of a remote computer. The remote computer can load the instructions into its dynamic memory and send the instructions over a telephone line using a modem. A modem local to computer system 1500 can receive the data on the telephone line and use an infrared transmitter to convert the data to an infrared signal. An infrared detector coupled to bus 1502 can receive the data carried in the infrared signal and place the data on bus 1502. Bus 1502 carries the data to main memory 1506, from which processor 1504 retrieves and executes the instructions. The instructions received by main memory 1506 may optionally be stored on storage device 1510 either before or after execution by processor 1504.

Computer system 1500 also preferably includes a communication interface 1518 coupled to bus 1502. Communication interface 1518 provides a two-way data communication coupling to a network link 1520 that is connected to a local network 1522. For example, communication interface 1518 may be an integrated services digital network (ISDN) card or a modem to provide a data communication connection to a corresponding type of telephone line. As another example, communication interface 1518 may be a local area network (LAN) card to provide a data communication connection to a compatible LAN. Wireless links may also be implemented. In any such implementation, communication interface 1518 sends and receives electrical, electromagnetic or optical signals that carry digital data streams representing various types of information.

Network link 1520 typically provides data communication through one or more networks to other data devices. For example, network link 1520 may provide a connection through local network 1522 to a host computer 1524 or to data equipment operated by an Internet Service Provider (ISP) 1526. ISP 1526 in turn provides data communication services through the worldwide packet data communication network, now commonly referred to as the "Internet" 1528. Local network 1522 and Internet 1528 both use electrical, electromagnetic or optical signals that carry digital data streams. The signals through the various networks and the signals on network link 1520 and through communication interface 1518, which carry the digital data to and from computer system 1500, are exemplary forms of carrier waves transporting the information.

Computer system 1500 may send messages and receive data, including program code, through the network(s), network link 1520, and communication interface 1518. In the Internet example, a server 1530 might transmit a requested code for an application program through Internet 1528, ISP 1526, local network 1522 and communication interface 1518. One such downloaded application may provide for one or more of the techniques described herein, for example. The received code may be executed by processor 1504 as it is received, and/or stored in storage device 1510, or other non-volatile storage for later execution. In this manner, computer system 1500 may obtain application code in the form of a carrier wave.

Further embodiments are disclosed in the subsequent list of numbered clauses:

1. An optical arrangement for homogenizing a beam of radiation, comprising:

   a first fiber for receiving the beam of radiation;
   a second fiber for outputting a homogenized beam of radiation;
   wherein both the first fiber and the second fiber are configured to homogenize the beam of radiation; and
   a transforming element located between the first fiber and the second fiber;
   wherein the second fiber comprises a length configured such that the beam of radiation exiting the second fiber comprises a substantially homogenized spatial intensity distribution and a substantially homogenized angular intensity distribution, both having a homogeneity of at least 0.60.

2. An optical arrangement as defined in clause 1, wherein said transforming element is configured to transform a spatial intensity distribution of the radiation exiting the first fiber at least partially into an angular intensity distribution of the radiation entering the second fiber and to transform an angular intensity distribution of the radiation exiting the first fiber at least partially into a spatial intensity distribution of the radiation entering the second fiber.

3. An optical arrangement as defined in clause 1 or 2, wherein the angular intensity distribution and/or the spatial intensity distribution of the homogenized beam of radiation comprises a flat-top intensity profile.

4. An optical arrangement as defined in any preceding clause, wherein both the first fiber and the second fiber are configured to homogenize the beam of radiation via chaotic mixing.

5. An optical arrangement as defined in any preceding clause, wherein the first fiber and/or second fiber is a multimode fiber.

6. An optical arrangement as defined in any preceding clause, wherein one or both of the first fiber and the second fiber comprises a non-circular-shaped fiber core.

7. An optical arrangement as defined in clause 6, wherein one or both of the first fiber and the second fiber comprises a regular polygon shaped fiber core.

8. An optical arrangement as defined in clause 7, wherein one or both of the first fiber and the second fiber comprises a square-shaped fiber core.

9. An optical arrangement as defined in any preceding clause, wherein the transforming element comprises a free space optical lens.

10. An optical arrangement as defined in clause 9, wherein the free space optical lens is in direct contact with an output end of the first fiber and an input end of the second fiber.

11. An optical arrangement as defined in clause 9 or 10, wherein the transforming element comprises a ball lens or a graded-index (GRIN) lens.

12. An optical arrangement as defined in any of clauses 1 to 8, wherein the transforming element comprises a GRIN fiber.

13. An optical arrangement as defined in clause 12, wherein the GRIN fiber is spliced to both of the first fiber and the second fiber to form a single fiber.

14. An optical arrangement as defined in any preceding clause, wherein at least an output end portion of the second fiber is comprised within a fiber connector.

15. An optical arrangement as defined in any preceding clause, wherein the transforming element and the second fiber are comprised within a fiber connector.

16. An optical arrangement as defined in any preceding clause, wherein an output end portion of the first fiber, the transforming element and the second fiber are comprised within a fiber connector.

17. An optical arrangement as defined in any of clauses 1 to 13, wherein an output end portion of the first fiber is comprised within a first fiber connector and at least an input end portion of the transforming element is comprised within a second fiber connector for mating to the first fiber connector.

18. An optical arrangement as defined in clause 17, wherein the transforming element and the second fiber are both comprised within the second fiber connector.

19. An optical arrangement as defined in any of clauses 1 to 13, wherein at least an output end portion of the transforming element is comprised within a first fiber connector and at least an input end portion of the second fiber is comprised within a second fiber connector for mating to the first fiber connector.

20. An optical arrangement as defined in clause 19, wherein the entire second fiber is comprised within the second fiber connector.

21. An optical arrangement as defined in any preceding clause, wherein the first fiber comprises a length of at least 500 mm.

22. An optical arrangement as defined in any preceding clause, wherein the second fiber comprises a length of between 9 mm and 35 mm.

23. An optical arrangement as defined in any preceding clause, wherein the radiation comprises a wavelength range spanning from 300 nm to 2000 nm.

24. An optical arrangement as defined in any preceding clause, wherein the homogeneity of the of the spatial intensity distribution and the angular intensity distribution of the beam of radiation exiting the second fiber is at least 0.80.

25. An optical arrangement as defined in any preceding clause, wherein at least a peripheral portion of the beam of radiation undergoes at least 3 internal reflections within the second fiber, said peripheral portion of the beam of radiation forming a maximum internal angle with respect to an optical axis of the second fiber.

26. An optical arrangement as defined in any preceding clause, wherein at least a peripheral portion of the beam of radiation undergoes at least 5 internal reflections within the second fiber, said peripheral portion of the beam of radiation forming a maximum internal angle with respect to an optical axis of the second fiber.

27. An optical arrangement as defined in any preceding clause, wherein the length of the second fiber is configured to maximize the homogeneity of the spatial intensity distribution and/or the angular intensity distribution of the beam of radiation.

28. A metrology apparatus configured to illuminate a sample with the homogenized beam of radiation output from an optical arrangement as defined in any preceding clause.

29. A metrology apparatus as defined in clause 28, comprising at least part of the optical arrangement as defined in any of clauses 15 to 20.

30. A method of homogenizing a beam of radiation, comprising:

propagating the beam of radiation through a first fiber to at least partially homogenize the radiation;

transforming a spatial intensity distribution of the radiation exiting the first fiber at least partially into an angular intensity distribution of the radiation entering a second fiber;

transforming an angular intensity distribution of the radiation exiting the first fiber at least partially into a spatial intensity distribution of the radiation entering the second fiber;

propagating the beam of radiation through the second fiber to further homogenize the radiation; and

outputting the homogenized beam of radiation from the second fiber;

wherein the second fiber comprises a length configured such that the beam of radiation exiting the second fiber comprises a substantially homogenized spatial intensity distribution and a substantially homogenized angular intensity distribution, both having a homogeneity of at least 0.60.

31. A method as defined in clause 30, wherein the angular intensity distribution and/or the spatial intensity distribution of the homogenized beam of radiation comprises a flat-top intensity profile.

32. A method as defined in clause 30 or 31, wherein both the first fiber and the second fiber are configured to homogenize the beam of radiation via chaotic mixing.

33. A method as defined in any of clauses 30 to 32, wherein the first fiber and/or second fiber is a multimode fiber.

34. A method as defined in any of clauses 30 to 33, wherein one or both of the first fiber and the second fiber comprises a non-circular-shaped fiber core.

35. A method as defined in clause 34, wherein one or both of the first fiber and the second fiber comprises a regular polygon shaped fiber core.

36. A method as defined in clause 35, wherein one or both of the first fiber and the second fiber comprises a square-shaped fiber core.

37. A method as defined in any of clauses 30 to 36, wherein the transforming element comprises a free space optical lens.

38. A method as defined in clause 37, wherein the free space optical lens is in direct contact with an output end of the first fiber and an input end of the second fiber.

39. A method as defined in clause 37 or 38, wherein the transforming element comprises a ball lens or a graded-index (GRIN) lens.

40. A method as defined in any of clauses 30 to 36, wherein the transforming element comprises a GRIN fiber.

41. A method as defined in clause 40, wherein the GRIN fiber is spliced to both of the first fiber and the second fiber to form a single fiber.

42. A method as defined in any of clauses 30 to 41, wherein the length of the second fiber is configured to maximize the homogeneity of the spatial intensity distribution and/or the angular intensity distribution of the beam of radiation.

43. A method as defined in clause 42, further comprising determining the length of the second fiber by performing a fiber cutback method.

44. A method as defined in clause 42 or 43, further comprising determining the length of the second fiber by performing a simulation on the homogenized beam of radiation exiting the second fiber.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. An optical arrangement for homogenizing a beam of radiation, comprising:

   a first fiber for receiving the beam of radiation;
   a second fiber for outputting a homogenized beam of radiation;
   wherein both the first fiber and the second fiber are configured to homogenize the beam of radiation; and
   a transforming element located between the first fiber and the second fiber;
   wherein the second fiber comprises a length configured such that the beam of radiation exiting the second fiber comprises a substantially homogenized spatial intensity distribution and a substantially homogenized angular intensity distribution, both having a homogeneity of at least 0.60.

2. An optical arrangement as claimed in claim 1, wherein said transforming element is configured to transform a spatial intensity distribution of the radiation exiting the first fiber at least partially into an angular intensity distribution of the radiation entering the second fiber and to transform an angular intensity distribution of the radiation exiting the first fiber at least partially into a spatial intensity distribution of the radiation entering the second fiber.

3. An optical arrangement as claimed in claim 1 or 2, wherein the angular intensity distribution and/or the spatial intensity distribution of the homogenized beam of radiation comprises a flat-top intensity profile.

4. An optical arrangement as claimed in any of claims 1 to 3, wherein the transforming element comprises a GRIN fiber.

5. An optical arrangement as claimed in claim 4, wherein the GRIN fiber is spliced to both of the first fiber and the second fiber to form a single fiber.

6. An optical arrangement as claimed in any preceding claim, wherein at least an output end portion of the second fiber is comprised within a fiber connector.

7. An optical arrangement as claimed in any preceding claim, wherein the transforming element and the second fiber are comprised within a fiber connector.

8. An optical arrangement as claimed in any of claims 1 to 5, wherein an output end portion of the first fiber is comprised within a first fiber connector and at least an input end portion of the transforming element is comprised within a second fiber connector for mating to the first fiber connector.

9. An optical arrangement as claimed in claim 8, wherein the transforming element and the second fiber are both comprised within the second fiber connector.

10. An optical arrangement as claimed in any of claims 1 to 5, wherein at least an output end portion of the transforming element is comprised within a first fiber connector and at least an input end portion of the second fiber is comprised within a second fiber connector for mating to the first fiber connector.

11. An optical arrangement as claimed in any preceding claim, wherein the first fiber comprises a length of at least 500 mm.

12. An optical arrangement as claimed in any preceding claim, wherein the second fiber comprises a length of between 9 mm and 35 mm.

13. An optical arrangement as claimed in any preceding claim, wherein at least a peripheral portion of the beam of radiation undergoes at least 3 internal reflections within the second fiber, said peripheral portion of the beam of radiation forming a maximum internal angle with respect to an optical axis of the second fiber.

14. A metrology apparatus configured to illuminate a sample with the homogenized beam of radiation output from an optical arrangement as claimed in any preceding claim.

15. A method of homogenizing a beam of radiation, comprising:

   propagating the beam of radiation through a first fiber to at least partially homogenize the radiation;

transforming a spatial intensity distribution of the radiation exiting the first fiber at least partially into an angular intensity distribution of the radiation entering a second fiber;

transforming an angular intensity distribution of the radiation exiting the first fiber at least partially into a spatial intensity distribution of the radiation entering the second fiber;

propagating the beam of radiation through the second fiber to further homogenize the radiation; and

outputting the homogenized beam of radiation from the second fiber;

wherein the second fiber comprises a length configured such that the beam of radiation exiting the second fiber comprises a substantially homogenized spatial intensity distribution and a substantially homogenized angular intensity distribution, both having a homogeneity of at least 0.60.

Fig. 1

Fig. 2

EP 4 685 529 A1

Fig. 3

Fig. 4

**Fig. 5**

**Fig. 6**

OA

OL    MMF1    BL    MMF2    MT

RD    HRD

**Fig. 7A**

NF    T-NF    O-NF

FF    T-FF    O-FF

(1)    (2)    (3)

**Fig. 7B**

IOA

OL    MMF1    MMF2-O

RD    TFE    HRD

**Fig. 8**

IOS-1

OL

MMF1

FC1

IRD

TFE

MMF2-O

HRD

**Fig. 9**

IOS-2

OL

MMF1

FC2

IRD

TFE

MMF2-O

HRD

**Fig. 10**

IOS-3

OL

MMF1

IRD

TFE

MMF2-O

HRD

FC3

FC4

**Fig. 11**

**Fig. 12**

**Fig. 13**

Europäisches
Patentamt

European
Patent Office

Office européen
des brevets

# EUROPEAN SEARCH REPORT

**Application Number**

EP 24 19 0917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/223467 A1 (GREGG PATRICK [US] ET AL) 22 July 2021 (2021-07-22) | 1-11,13, 15 | INV. G02B6/00 G02B27/09 |
| A | * the whole document * | 12 | |
| | ----- | | |
| X | US 2017/329232 A1 (GOORDEN SEBASTIANUS ADRIANUS [NL] ET AL) 16 November 2017 (2017-11-16) * paragraph [0086] * | 1-4,14, 15 | |
| | ----- | | |
| X | US 10 222 623 B2 (RAYTHEON CO [US]) 5 March 2019 (2019-03-05) * paragraph [0005] * * paragraph [0035] * | 1-4,15 | |
| | ----- | | |

**TECHNICAL FIELDS SEARCHED (IPC)**

G02B

The present search report has been drawn up for all claims

| Place of search | Date of completion of the search | Examiner |
|---|---|---|
| Munich | 8 January 2025 | Albayrak, Charlotte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 685 529 A1

## ANNEX TO THE EUROPEAN SEARCH REPORT
## ON EUROPEAN PATENT APPLICATION NO.

EP 24 19 0917

08-01-2025

| Patent document cited in search report | | Publication date | Patent family member(s) | | Publication date |
|---|---|---|---|---|---|
| US 2021223467 | A1 | 22-07-2021 | CN | 113219674 A | 06-08-2021 |
| | | | JP | 7572190 B2 | 23-10-2024 |
| | | | JP | 2021128325 A | 02-09-2021 |
| | | | US | 2021223467 A1 | 22-07-2021 |
| US 2017329232 | A1 | 16-11-2017 | TW | 201805729 A | 16-02-2018 |
| | | | US | 2017329232 A1 | 16-11-2017 |
| | | | WO | 2017194393 A1 | 16-11-2017 |
| US 10222623 | B2 | 05-03-2019 | EP | 3615969 A1 | 04-03-2020 |
| | | | IL | 269881 A | 28-11-2019 |
| | | | US | 2018314071 A1 | 01-11-2018 |
| | | | WO | 2018200255 A1 | 01-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B2
- US 20100328655 A1
- US 2011102753 A1
- US 20120044470 A1
- US 20110249244 A1
- US 20110026032 A1
- EP 1628164 A2
- US 7791724 B2
- US 7701577 B2
- US 8115926 B2
- US 8553227 B2
- US 8681312 B2
- US 8792096 B2
- US 8823922 B2
- US 8692994 B2
- US 13533110 B
- US 8797554 B2
- WO 2011012624 A1
- US 20160161863 A1
- US 20160370717 A1
- US 7265364 B2
- US 7646471 B2
- US 2010233600 A1
- WO 2016102127 A1
- US 6961116 B2
- US 2015261097 A1
- US 10303064 B2

**Non-patent literature cited in the description**

- **SAMUEL HALVERSON** ; **ARPITA ROY** ; **SUVRATH MAHADEVAN** ; **LAWRENCE RAMSEY** ; **ERIC LEVI** ; **CHRISTIAN SCHWAB** ; **FRED HEARTY** ; **NICK MACDONALD**. An efficient, compact, and versatile fiber double scrambler for high precision radial velocity instruments. *The Astrophysical Journal*, 2015, vol. 806 (61), 9